# EUROPEAN PATENT APPLICATION

(11) **EP 1 274 025 A1**
(43) Date of publication of application: **08.01.2003**
(21) Application number: 01124028.0
(22) Date of filing: 09.10.2001
(51) Int. Cl.: G06F 17/60, G07F 7/10, G07F 19/00

(54) **Electronic data interchange system, sales server, settlement server, terminal, sales method, settlement method, purchasing method and information recording medium storing information for realizing the same**

(30) Priority: 10.10.2000 JP 2000308609
(71) Applicant: WebMoney Corporation, Tokyo 141-0021 (JP)
(72) Inventor: Takatsu, Yuichi, c/o WebMoney Corp., Tokyo 141-0021 (JP); Sugiura, Yoshihiko, c/o WebMoney Corp., Tokyo 141-00221 (JP)
(74) Representative: Patentanwälte Rüger, Barthelt & Abel

(57) **Abstract**

A terminal 121 receives input data regarding a desired product, and sends a message including information regarding the product to a sales server 141. The sales server 141 receives this message, acquires the price of the product, and sends a message including the price and a settlement server 161 to the terminal 121. The terminal 121 receives this message, accepts input data of a scratch number of a prepaid card, and sends a message including the scratch number, the price and the sales server 141 to the settlement server 161. The settlement server 161 receives this message, acquires the balance corresponding to the scratch number. If the balance is not less than the price, the settlement server 161 updates the balance by subtracting the price from the balance, and sends a message that the settlement has been succeeded to the sales server 141. The sales server 141 receives this message and provides the desired product.

## Description

The present invention relates to an electronic data interchange system, a sales server, settlement server, a terminal, a sales method, a settlement method and a purchasing method all for suitable for Electronic Data Interchange (EDI), for managing products or services to be provided while preventing the leakage of personal information with ease, and relates also to a computer readable information recording medium recording a program for realizing the above.

Conventionally, a technique for realizing EDI through a computer communications network, especially the Internet, has been proposed. In such EDI, there are proposed a technique for transmitting a user name, a credit car number and its expiration date using a reliable transmission technique employing an SSL (Secure Socket Layer) crystosystem so as to perform settlement of the balance, and a technique for summing the total price for products purchased by a user and adding the total price into the Internet charge sent from an Internet provider of the user.

In addition, there is proposed another technique for performing the settlement using a prepaid card having an ID (identification) code recorded thereon. In this technique, the user purchases a prepaid card in advance. A sales server which sells products or services informs the user about their selling items on the Web site managed by the sales server. Then, the user accesses the Web site, and accesses also a Web site of a settlement server in accordance with information, included in the Web site of the sales server and linked to the settlement server.

The settlement server stores information representing products and services provided from the sales server and their prices, in advance. The settlement server stores also information representing the balance of the user's account, in association with an ID code recorded on his/her prepaid card.

If the user accesses the settlement server and specifies a desired product(s) or services and the ID code of his/her prepaid card, the settlement server checks the balance of the user's account. In the case where the balance is equal to or greater than the total price of the desired product(s), the settlement server subtracts the price from the balance so as to update the balance information, and informs the sales server that the settlement has been succeeded.

Upon reception of information representing that the settlement has been succeeded, the sales server provides the desired products or services to the user.

In the EDI technique employing a credit card, personal information may fearfully be open to the public. In the EDI technique employing the Internet through which personal information is pretty confidential, it is desired that data interchange be done without a credit card.

In the EDI technique using the Internet service provider or the above-described prepaid card, it is necessary to store price information of products or services to be provided, in the settlement server. In the Internet transactions wherein the lineup of products or services are updated preferably as soon as possible, it is preferred that the seller to be providing products or services make change in type information or price information of the products or services through only the sales server which can directly be managed by the seller.

The present invention has been made in consideration of the above. It is accordingly an object of the present invention to provide an EDI system, a sales server, a settlement server, a terminal, a sales method, a settlement method and a purchasing method which are all suitable for Electronic Data Interchange, for managing products or services to be provided while preventing the leakage of personal information with ease, and relates also to a computer readable information recording medium recording a program for realizing the above.

In order to accomplish the above object, according to the first aspect of the present invention, there is provided an EDI (Electronic Data Interchange) system (101) comprising at least one terminal (121), at least one sales server (141) and a settlement server (161), and the system being characterized in that:
(a) the at least one terminal (121)
   receives input data regarding a desired product or services to be provided, and
   sends a product/service specification message including information specifying the desired product or services to be provided, to the at least one sales server (141);
(b) the at least one sales server (141)
   receives the product/service specification message,
   acquires a price of the product or services specified in the information included in the product/service specification message, and
   sends a price/settlement-server specification message including the acquired price and information specifying the settlement server, to the at least one terminal (121);
(c) the at least one terminal (121)
   receives the price/settlement-server specification message from the at least one sales server (141),
   receives input data representing an ID (identification) code for product or services, and
   sends, to the settlement server (161) specified in the information included in the price/settlement-server specification message, an ID-code/price/sales-server specification message including information specifying the ID code, the price specified in the information included in the price/settlement-server specification message and the at least one sales server (141);
(d) the settlement server (161)
   receives the ID-code/price/sales-server specification message,
   acquires balance stored in advance in association with the ID code specified in the information included in the ID-code/price/sales-server specification message,
   in a case where the acquired balance is equal to or greater than the price specified in the information included in the ID-code/price/sales-server specification message, (d1) updates the balance by subtracting the price from the balance stored in advance in association with the ID code, and (d2) sends a settlement success message including information representing that settlement is succeeded to the at least one sales server (141) specified in the information included in the ID-code/price/sales-server specification message; and
(e) the at least one sales server (141)
   receives the settlement success message, and
   provides the product or services specified in the information included in the product/service specification message.

The at least one sales server (141) may control the settlement server to send the price/settlement-server specification message to the at least one terminal (121), instead of sending the price/settlement-server specification message to the at least one terminal (121) directly therefrom.

The at least one sales server (141) may include information specifying the product or services specified in the information included in the product/service specification message, in the price/settlement-server specification message;
the at least one terminal (121) may include information specifying the product or services specified in the information included in the price/settlement-server specification message, in the ID-code/price/sales-server specification message;
the settlement server (161) may include information specifying the product or services specified in the information included in the ID-code/price/sales-server specification message, in the settlement success message; and
the at least one sales server (141) may acquire the product or services specified in the information included in the product/service specification message, from the information specifying the product or services specified in the settlement success message.

The price/settlement-server specification message may be encoded by the at least one sales server (141) and decoded by the at least one terminal (121).

The ID-code/price/sales-server specification message may be encoded by the at least one terminal (121), and decoded by the settlement server (161).

At least one of the product/service specification message, the price/settlement specification message, the settlement success message, and the ID-code/price/sales-server specification message may be transmitted through a computer communications network, especially Internet (181).

In a case where the at least one sale server (141) provides the at least one terminal (121) with the product or services specified in the information included in the product/service specification message:
(f) the at least one sales server (141) may send a product/service-location specification message including information specifying a location of the product or services, to the settlement server (161);
(g) the settlement server (161) may receive the product/service-location specification message from the at least one sales server (141), and
   send a product/service-location notification message including information specifying the location of the product or services specified in the information included in the product/service-location specification message; and
(h) the at least one terminal (121) may receive the product/service-location notification message, and
   acquire the product or services, from the location thereof specified in the information included in the product/service-location notification message.

In order to achieve the above object, according to the second aspect of the present invention, there is provided a sales server (141) performing data communications with at least one terminal (121) and a settlement server (161), and the sales server characterized by comprising:
a product/service specification message receiver (801) which receives a product/service specification message including information specifying a desired product or services to be provided, from the at least one terminal;
a price obtaining section (802) which obtains a price of the product or services specified in the information included in the product/service specification message;
a price/settlement-server specification message sender (803) which sends a price/settlement-server specification message including information specifying the obtained price and settlement server (161), to the at least one terminal (121);
a settlement-success message receiver (804) which receives a settlement success message including information representing that settlement is succeeded, from the settlement server (161); and
a product/service provider (805) which provides the product or services specified in the information included in the product/service specification message.

In order to achieve the above object, according to the third aspect of the present invention, there is provided a settlement server (141) performing data communications with at least one terminal (121) and at least one sales server (161), and the settlement server (141) characterized by comprising:
an ID-code/price/sales-server specification message receiver (601) which receives, from the at least one terminal (121), an ID-code/price/sales-server specification message information including a product or services, a price of the product or services, a settlement ID code for the product or services and the at least one sales server (161);
a balance acquisition section (602) which acquires balance stored in advance in association with the ID code specified in the information included in the ID-code/price/sales-server specification message;
a balance updating section (603) which updates the balance by subtracting the price from the balance stored in advance in association with the ID code, in a case where the balance is equal to or greater than the price specified in the information included in the ID-code/price/sales-server specification message; and
a settlement-success message sender (604) which sends a settlement success message including information representing that settlement is succeeded to the at least one sales server (141) specified in the information included in the ID-code/price/sales-server specification message, in a case where the balance is updated.

In order to achieve the above object, according to the fourth aspect of the present invention, there is provided a terminal (121) performing data communications with at least one sales server (141) and a settlement server (161), the terminal characterized by comprising:
a product/service input accepting section (1001) which accepts input data regarding a desired product or services to be provided;
a product/service specification message sender (1002) which sends a product/service specification message including information specifying the accepted product or services, to the at least one sales server (141);
a price/settlement-server specification message receiver (1003) which receives a price/settlement-server specification message including information specifying a price of the product or services and the settlement server (161);
an ID-code input accepting section (1004) which accepts input data of a settlement ID code for the product or services; and
an ID-code/price/sales-server specification message sender (1005) which sends an ID-code/price/sales-server specification message including information specifying the ID code, the price specified in the information included in the price/settlement-server specification message and the at least one sales server (141), to the settlement server (161) specified in the information included in the price/settlement-server specification message.

In order to achieve the fifth aspect of the present invention, there is provided a sales method of selling products through data communications with at least one terminal and a settlement server, the method characterized by comprising the steps of:
receiving a product/service specification message including information specifying a desired product or services to be provided, from the at least one terminal;
obtaining a price of the product or services specified in the information included in the product/service specification message;
sending a price/settlement-server specification message including information specifying the obtained price and the settlement server, to the at least one terminal;
receiving a settlement-success message including information representing that settlement is succeeded, from the settlement server; and
providing the product or services specified in the information included in the product/service specification message.

In order to achieve the above object, according to the sixth aspect of the present invention, there is provided a settlement method of performing settlement through data communications with at least one terminal and at least one sales server, the method characterized by comprising the steps of:
receiving, from the at least one terminal, an ID-code/price/sales-server specification message including information specifying a product or services to be provided, a price of the product or services, a settlement ID code of the product or services and the at least one sales server;
obtaining balance stored in advance in association with the ID code specified in the information included in the ID-code/price/sales-server specification message;
updating the balance by subtracting the price from the balance stored in advance in association with the ID code, in a case where the balance is equal to or greater than the price specified in the information included in the ID-code/price/sales-server specification message; and
sending a settlement-success message including information representing that settlement is succeeded, to the at least one sales server specified in the information included in the ID-code/price/sales-server specification message, in a case where the balance is updated.

In order to achieve the above object, according to the seventh aspect of the present invention, there is provided a method for purchasing a product or services through data communications with at least one sales server and a settlement server, the method characterized by comprising the steps of:
accepting input data regarding a desired product or services;
sending a product/service specification message including information specifying the accepted product or services, to the at least one sales server;
receiving, from the at least one sales server, a price/settlement-server specification message including information specifying a price of the product or services and a settlement server;
accepting input data regarding a settlement ID code of the product or services; and
sending an ID-code/price/sales-server specification message including information specifying the ID code, the price specified in the information included in the price/settlement-server specification message and the at least one sales server, to the settlement server specified in the information included in the price/settlement-server specification message.

In order to achieve the above object, according to the eighth aspect of the present invention, there is provided a program product for controlling a computer which performs data communications with at least one terminal and a settlement server to function as:
a product/service-specification message receiver which receives a product/service specification message including information specifying a desired product or services to be provided, from the at least one terminal;
a price obtaining section which obtains a price of the product or services specified in the information included in the product/service specification message;
a price/settlement-server specification message sender which sends a price/settlement-server specification message including information specifying the obtained price and the settlement server, to the at least one terminal;
a settlement-success message receiver which receives a settlement success message including information representing that settlement is succeeded, from the settlement server, and
a product/service provider which provides the product or services specified in the information included in the product/service specification message.

In order to achieve the above object, according to the ninth aspect of the present invention, there is provided a program product for controlling a computer, which performs data communications with at least one terminal and at least one sales server, to function as:
an ID-code/price/sales-server specification message receiver which receives, from the at least one terminal, an ID-code/price/sales-server specification message including information specifying the product or services to be provided, a price of the product or services, a settlement ID code of the product or services and the at least one sales server,
a balance acquisition section which acquires balance stored in advance in association with the ID code specified in the information included in the ID-code/price/sales-server specification message;
a balance updating section which updates the balance by subtracting the price from the balance stored in advance in association with the ID code, in a case where the balance is equal to greater than the price specified in the information included in the ID-code/price/sales-server specification message; and
a settlement-success message sender which sends a settlement success message including information representing that settlement is succeeded, to the at least one sales server specified in the information included in the ID-code/price/sales-server specification message, in a case where the balance is updated.

In order to achieve the above object, according to the tenth aspect of the present invention, there is provided a program product for controlling a computer, which performs data communications with at least one sales server and a settlement server, to function as:
a product/service input accepting section which accepts input data regarding a desired product or services to be provided;
a product/service specification message sender which sends a product/service specification message including information specifying the desired product or services, to the at least one sales server;
a price/settlement-server specification message receiver which receives, from the at least one sales server, a price/settlement-server specification message including information specifying a price of the product or services to be provided and the settlement server;
an ID-code input accepting section which accepts input data of a settlement ID code of the product or services; and
an ID-code/price/sales-server specification message sending section which sends an ID-code/price/sales-server specification message including information specifying the ID code, the price specified in the information included in the price/settlement-server specification message and the at least one sales server, to the settlement server specified in the information included in the price/settlement-server specification message.

In order to achieve the above object, according to the eleventh aspect of the present invention, there is provided an EDI system including at least one terminal, at least one terminal and a settlement server, and the system being characterized in that:
(a) the at least one terminal
   accepts input data of a desired product or services to be provided, and
   sends a product/service specification message including information specifying the accepted product or services, to the at least one sales server;
(b) the at least one sales server
   receives the product/service specification message,
   obtains a product of the product or services specified in the information included in the product/service specification message, and
   instructs the settlement server to send a price/settlement-server specification message including information specifying the obtained price and the settlement server;
(c) the settlement server sends the price/settlement-server specification message to the at least one terminal;
(d) the at least one terminal
   receives the price/settlement-server specification message,
   accepts input data of a settlement ID code of the product or services, and
   sends an ID-code/price/sales-server specification message including information specifying the ID code, the price specified in the information included in the price/settlement-server specification message and the at least one sales server, to the settlement server specified in the information included in the price/settlement-server specification message;
(e) the settlement server
   receives the ID-code/price/sales-server specification message,
   acquires balance stored in advance in association with the ID code specified in the information included in the ID-code/price/sales-server specification message, and
   sends a purchase-confirmation-page displaying message to the at least one terminal, in a case where the balance is equal to or greater than the price specified in the information included in the ID-code/price/sales-server specification message,
(f) the at least one terminal
   receives the purchase-confirmation-page displaying message,
   accepts input data of purchase confirmation, and
   sends a purchase-confirmation response message to the settlement server, in a case where purchasing of the product or services is confirmed based on the input data;
(g) the settlement server
   sends the purchase-confirmation response message,
   updates the balance by subtracting the price from the balance stored in advance in association with the ID code, and
   sends a settlement success message including information representing that settlement is succeeded to the at least one sales server;
(h) the at least one sales server
   receives the settlement success message,
   sends a settlement-result-receipt confirmation message to the settlement server, and
   provides the product or services specified in the information included in the product/service specification message;
(i) the settlement server
   receives the settlement-result-receipt confirmation message, and
   sends a settlement-completion notification message to the at least one terminal; and
(j) the at least one terminal
   receives the settlement-completion notification message.

The object and other objects and advantages of the present invention will become more apparent upon reading of the following detailed description and the accompanying drawings in which:
FIG. 1 is an explanatory diagram showing the schematic structure of an EDI (Electronic Data Interchange) system according to the first embodiment of the present invention;
FIGS. 2A and 2B are explanatory diagrams each showing the outward appearance of a prepaid card;
FIG. 3 is an explanatory diagram showing data transmission, wherein messages are sent and received among a terminal, a sales server, and a settlement server, in the EDI system of the first embodiment of the present invention;
FIG. 4 is a diagram exemplarily showing a display page, displayed on a WWW browser display screen, for applying for products (items) to be purchased;
FIG. 5 is a diagram exemplarily showing a display page, displayed on the WWW browser display screen, when settling the payment using the prepaid card;
FIG. 6 is an exemplary diagram showing the schematic structure of the settlement server;
FIG. 7 is a flowchart showing the flow of a process which is carried out by the settlement server;
FIG. 8 is an exemplary diagram showing the schematic structure of the sales server;
FIG. 9 is a flowchart showing the flow of a process which is carried out by the sales server;
FIG. 10 is an exemplary diagram showing the schematic structure of the terminal;
FIG. 11 is a flowchart showing the flow of a process which is carried out by the terminal;
FIG. 12 is an exemplary diagram showing the schematic structure of a typical information processor serving as the terminal, the sales server, and the settlement server,
FIG. 13 is an explanatory diagram showing data transmission, wherein messages are sent and received among a terminal, a sales server, and a settlement server, in an EDI system according to the second embodiment of the present invention;
FIG. 14 is a flowchart showing the flow of a process which is carried out by the settlement server included in the EDI system according to the second embodiment of the present invention;
FIG. 15 is a flowchart showing the flow of a process which is carried out by the sales server included in the EDI system of the second embodiment; and
FIG. 16 is an explanatory diagram showing the data transmission, wherein messages are sent and received among a terminal, a sales server, and a settlement server, in an EDI system according to the third embodiment of the present invention.

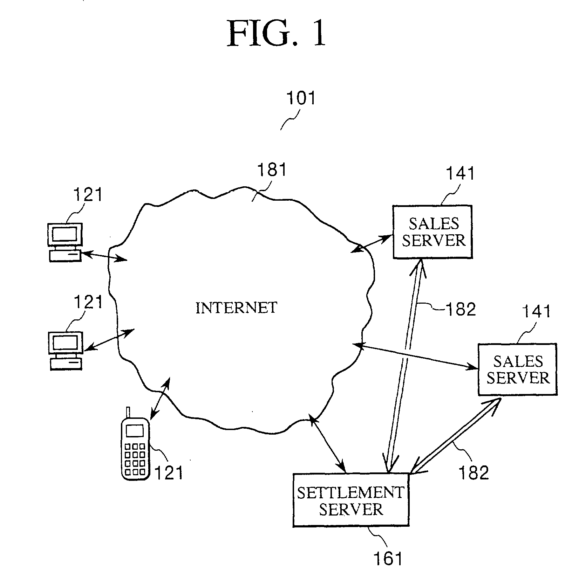

FIG. 1 is an exemplary diagram showing the schematic structure of an EDI (Electronic Data Interchange) system according to the first embodiment of the present invention.

An EDI system 101 includes one or more terminals 121, one or more sales servers 141, and a settlement server 141. Each of the terminals 121 is used by a user who may purchase products (items) or use the services of others. Each of the sales servers 141 manages and provides information for selling products or services. The settlement server 161 settles the payment for products or services to be purchased.

The terminals 121 are connected with the sales servers 141 and the settlement servers 161 through the Internet 181.

The sales servers 141 are connected to the settlement server 161 through a private communications line 182 for the security sake. The sales server 141 may be connected to the settlement server 161 through the Internet 181, in place of the private communications line 182, so as to establish the secure communication using a Secure Socket Layer technology. In this embodiment, the terminals 121 access the sales servers 141 and the settlement server 161 using the WWW (World Wide Web) browser.

The terminals 121 may access the sales servers 141 and the settlement server 161 using a dedicated application program for accessing, a plug-in installed in the WWW browser or a JAVA applet that can be run by the WWW browser, etc. A mobile telephone may be employed as the terminal 121. For example, the "i-mode service" provided by NTT DoCoMo, Inc. may be used on each of the terminal 121.

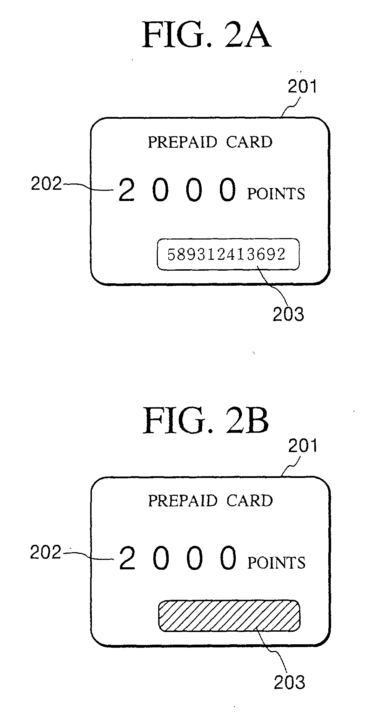

To buy a product or services from others, the user of each terminal 121 purchases a prepaid card in advance for the settlement of payment. FIGS. 2A and 2B are explanatory diagrams each showing such a prepaid card. Explanations will now be made to the prepaid card with reference to FIGS. 2A and 2B.

As shown in FIG. 2A, on a prepaid card 201, the primary amount of money 202 for used in the settlement of payment and an ID (identification) code 203 are printed.

The prepaid card 201 may be a scratch card, etc. Just at the time the prepaid card 201 is purchased, the ID code 203 is covered by opaque substance on the prepaid card 201, as shown in FIG. 2B. After the user purchases the prepaid card 201, he/she scratches the surface of the card using a coin, etc., thereby showing the ID code 203 thereon.

In this embodiment, to facilitate inputting of information by the user, a numeral string is employed as the ID code 203. Hence, the ID code of the prepaid card 201 in a scratch card format will timely be referred to as a "scratch number" in this embodiment.

The scratch number may include not only numerals, but also alphabetical codes, any other various codes prepared on the keyboard, etc.

The primary amount of money 202 of "2,000 yen" is printed on the prepaid card 201 shown in FIGS. 2A and 2B. The user can buy any items or services using this prepaid card 201, until the total amount of money reaches 2,000 yen.

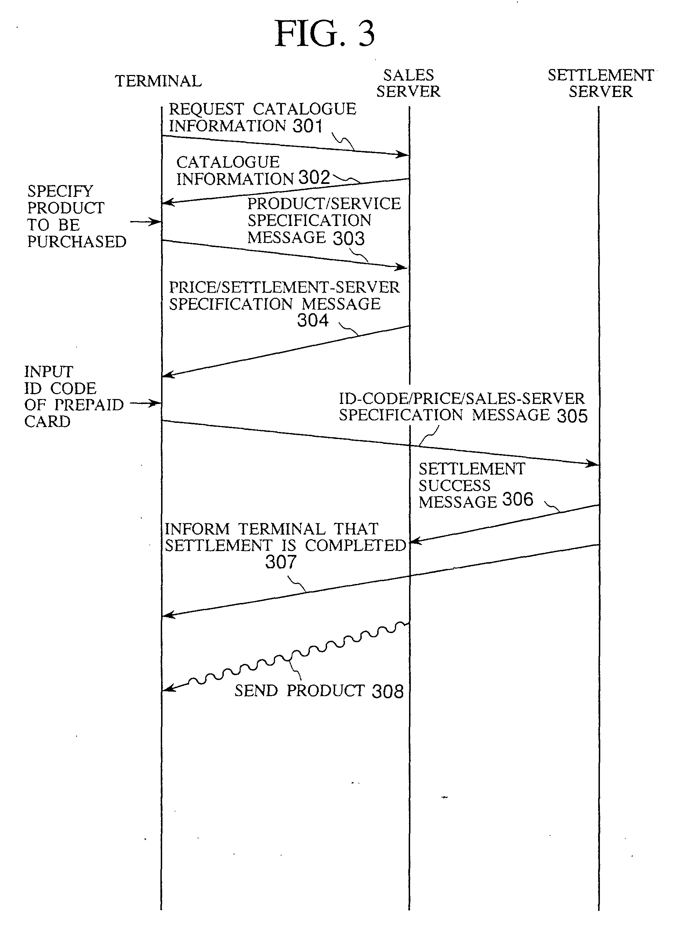

Explanations will now be made to an exemplary case where the user buys products provided by the sales server 141 from a mail-order dealer, using the terminal 121. FIG. 3 is an explanatory diagram showing data transmission, wherein a message is sent from received among the terminal 121, the sales server 141 and the settlement server 161 in time series. This data transmission will now be described with reference to FIG. 3.

The user accesses one of the sales servers 141 using the WWW browser (301). Upon this, the accessed sales server 141 refers to a product price database included therein, creates catalogue information regarding products to be provided by the sales server 141, and sends the created information to the terminal 121 (302).

The catalogue information is created in an HTML (Hyper Text Markup Language) format.

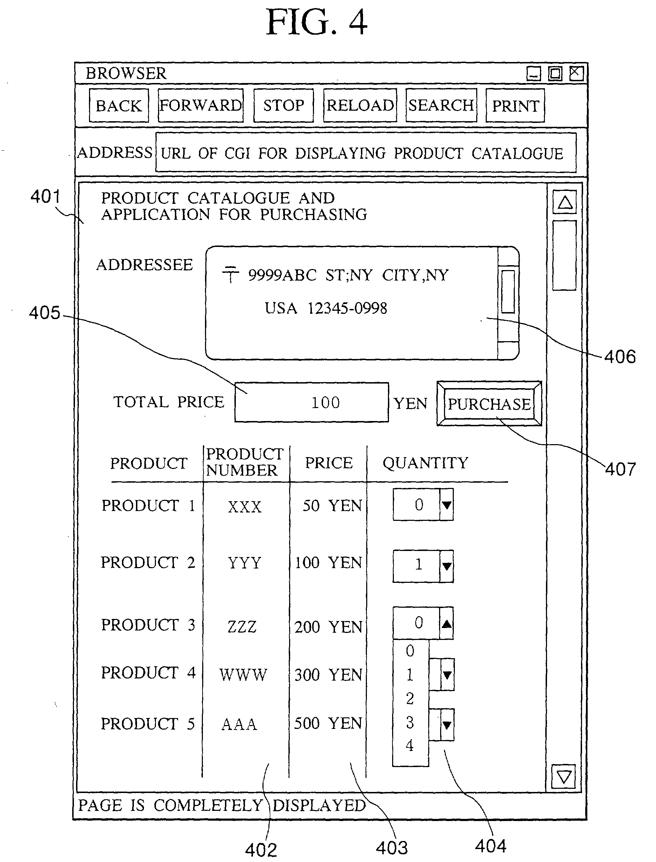

FIG. 4 is an explanatory diagram exemplarily showing a display page showing the catalogue information to be displayed on the display screen of the terminal 121.

A display section 401 loaded by the WWW browser includes a product field 402 showing products to be purchased, a price field 403 of the products, a number field 404, a total price field 405, an addressee field 406 and a "purchase" button 407. Specifically, the number field 404 is a field through which the user inputs the number of the products to be purchased. The total price field 405 displays the total price of the products to be purchased. The addressee field 406 is a field through which the user inputs the addressee of the products.

If the user inputs the number of desired products in the number field 404, the total price thereof is calculated by the function of the JavaScript included in the WWW browser. Then, the calculated result is displayed in the total price field 405.

Upon selection of a desired product, the user inputs the addressee (usually, the residential address or the like) of the product to be provided from the mail-order dealer, in the addressee field 406.

If the user clicks on the "purchase" button 407, form information specified in the catalogue information is formed and sent to a corresponding one of the sales server 141 by the WWW browser, as a product/service specification message specifying a desired product(s) and/or services to be provided (303).

To form this product/service specification message, the catalogue information needs to include a "FORM" tag.

In the "FORM" tag, "POST" or "GET" is specified as a METHOD attribute, so that the product/service specification message can be sent from the terminal 121.

The location (a URL address) of an CGI script prepared in the sales server 141 is specified as an ACTION attribute. Operations of the sales server 141, as will be explained later, can be realized by this CGI script.

A "TEXTAREA" tag is used in the "FORM" tag to prepare the number field 404 and addressee field 406.

An "INPUT" tag specifying the action of "submit" is used in the "FORM" tag as a "TYPE" attribute to prepare the "purchase" button.

Since the sales server 141 provides products to customers, users, etc., but does not provide services, let it be assumed that the product/service specification message includes the information as follows:
- the product number of a product(s) which the user wants to purchase;
- the number of the product(s) to be purchased by the user, and
- the addressee of the product(s) to be sent.

Note that the similar information is specified in the product/service specification message, in the case where services are to be provided. When sending and receiving the product/service specification message, it is preferred that the information regarding the addressee be decoded using a security technology, such as an SSL technology, etc., with regard for the privacy of the user.

Each of the sales servers 141 acquires information representing the product number of the products and the number of the products to be purchased from the product/service specification message. The sales server 141 refers to the price database, and calculates the total price of the products.

The sales server 141 creates a transaction ID code not to overlap with another transaction ID code. Further, the sales server 141 stores information included in the previously received (303) product/service specification message in a transaction database, in association with its transaction ID code.

In this embodiment, the transaction ID code includes ID information (such as a registration number or contract number toward the settlement server) of the sales server 141. In this structure, the settlement server 161 refers to the transaction ID code, so as to find out which one of the sales servers 141 is a target server to handle the settlement in a case where there are a plurality of sales server 141.

The sales server 141 creates a price/settlement-server specification message specifying the total cost and the settlement server, and specifically including the following information items of:
- a transaction ID code;
- the total price; and
- an address of the CGI script of the settlement server.

The above information items may be included in the price/settlement-server specification message, so that the user can check the desired product(s) to be purchased and its number. In this embodiment, the above information includes the price/settlement-server specification message.

Likewise the above-described catalogue information, the price/settlement-server specification message is created in an HTML format, and the above information items are specified as the text of the HTML document or tag attributes.

Further, the sales server 141 sends the created price/settlement-server specification message to the terminal 121 (304). During this data transmission, it is preferred that the security technology of, for example, the SSL technology be employed.

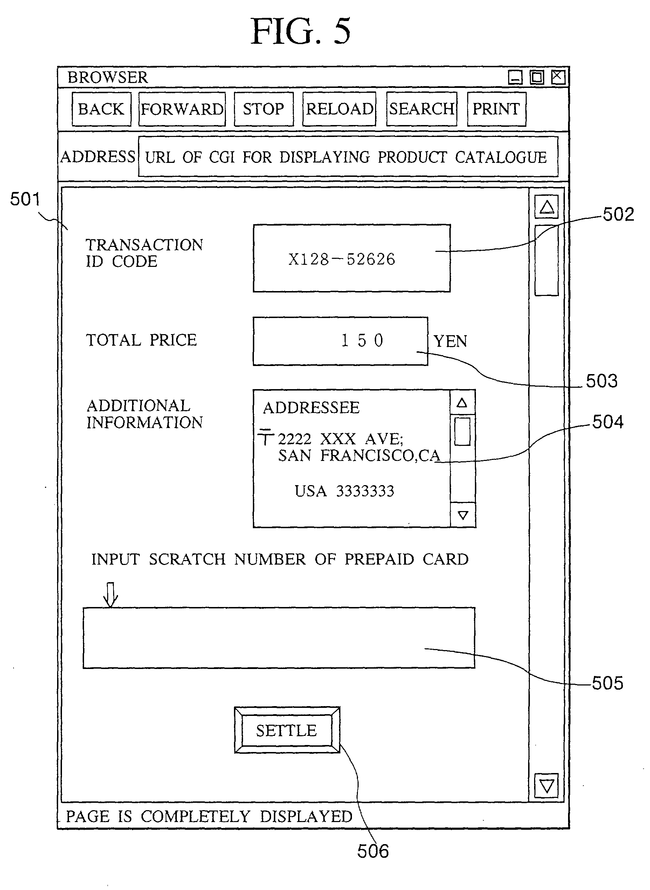

If the terminal 121 receives the price/settlement-server specification message, various information is displayed on its display screen by the WWW browser. FIG. 5 is an explanatory diagram exemplarily showing a display page to be displayed upon reception of the price/settlement-server specification message.

A display section 501 loaded by the WWW browser includes a transaction ID field 502 showing the transaction ID code and a total price field 503 showing the total price of the products to be purchased. Any additional information, including the target products to be purchased and the number thereof, is displayed in an additional information field 504.

In addition to the above, a prepaid-card ID field 505 is prepared in the display section 501, and the user inputs a scratch number of the prepaid card 201 for use in the purchasing of products in the prepaid-card ID field 505.

Upon completion of the inputting of the scratch number, he/she clicks on a "purchase" button 506.

An "ACTION" attribute of the "FORM" tag included in the settlement-server specification server corresponds to a URL of the CGI script prepared in the settlement server 161. If the user clicks on the "purchase" button 506, an ID-code/price/sales-server specification message specifying an ID code, the total price and the sales server is created by the WWW server and set to the CGI script of the settlement server 161 (305). The ID-code/price/sales-server specification message includes the following information items of:
- the transaction ID code;
- the total price; and
- the scratch number.

In this embodiment, it has been explained that a contract number, etc. for identifying the corresponding sales server 141 is included in the transaction ID code. However, such information may be included in each message.

It is preferred that the ID-code/price/sales-server specification message be sent and received using the security technology, such as the SSL technology, etc., with regard for the privacy of the user.

The settlement server 161 stores, in a balance database, the scratch number printed on the prepaid card 201 in association with its balance. In the case where the user has never used the prepaid card 201 shown in FIG. 2 before, the balance of "2,000 yen" is recorded in the balance database.

The settlement server 161 receives the ID-code/price/settlement-server specification message, and acquires information representing the scratch number from this received message. Then, the settlement server 161 refers to the balance database using the scratch number as a key, and checks the balance of the prepaid card.

Stored actually in the balance database is not the scratch number itself in association with its corresponding balance, but an internal ID code which can directly be generated from the scratch number in association with the balance. The scratch number is converted into the internal ID code, enabling to check if the input scratch number is valid or not. In the case where the input scratch number is not valid, information representing that the input scratch number is not effect is sent from the sales server 141 to the terminal 121 (not shown in the illustration).

The balance is compared with the total prices included in the ID-code/price/sales-server specification message. In the case where the total price is equal to or lower than the balance, the settlement will be succeeded. In this case, an amount of money calculated by subtracting the total price from the balance is registered in the balance database, so as to update the database.

Now, the settlement server 161 determines which one of the plurality of sales servers 141 is the target server to settle the payment, based on the transaction ID code included in the ID-code/price/sales-server specification message. Then, the settlement server 161 creates a settlement success message and sends the created message to the determined sales server 141 (306). This settlement success message includes the following information items of:
- the transaction ID code; and
- information representing that the settlement is succeeded.

The settlement success message may be sent and received using the SSL technique through the Internet 181. However, the settlement success message may be sent and received using the private communications line 182, thereby enhancing the security of the settlement.

In the case where the settlement is succeeded, the settlement server 161 sends the information representing that the settlement is completed to the terminal 121 of the user (307). The user prints the sent information or store the information in the form of a file, thereby to keep a copy of the product purchasing.

On the contrary, in the case where the settlement is not succeeded, i.e. the balance is not enough to purchase the products, the settlement server 161 informs the terminal of the user that the settlement is not succeeded (not shown in the illustration). At this time, it is preferred that the settlement server 161 send information, in the HTML format, representing that the products can still be purchased if the user prepares another prepaid card 201 and including an input field for the ID code 203 of the another prepaid card 201.

In the case where the user prepares another prepaid card 201, the balance of the previous prepaid card 201 and the balance of the another prepaid card 201 are added, and the above-described processes should be performed again.

Upon reception of the settlement success message, the sales server 141 obtains its transaction ID code, and acquires information representing its corresponding product number, the number of products to be purchased, the addressee of the products, from the transaction database. Then, the sales server 141 sends the number of the products to the addressee (308).

Accordingly, in this embodiment, the settlement server 161 checks the transaction ID code, thereby to identify which one of the plurality of sales servers 141 is the target sales server 141. It is sufficient that only the sales server 141 manages the type of the purchased products, the number of the purchased products, and their unit price. Hence, it is not necessary that the settlement server 161 maintains and manages the above information (but may simply maintain and manage the information).

The sales server 141 checks the transaction ID code, thereby to understand what and how many products are purchased by each user, and the products' unit price and the total price of the products purchased by each user.

Thus, the sales server 141 can correct, update and change the lineup or price of the products at its convenience. Unlike the conventional EDI system employing a prepaid card, in this embodiment, it is not necessary (but it may) that the settlement server 161 is informed of the correction, updating and change made in the lineup or price of the products.

As explained above, the information representing the user-purchased products and the information representing the addressee can be shared only between the terminal 121 of the user and the sales server 141 without the settlement server 161. Thus, the privacy of the user can further be protected.

The information representing the scratch number that the user inputs from the terminal 121 may not be sent to the sales server 141. In this structure, even if there is an ill-intentioned sales server 141, the information about the balance of the user-possessed prepaid card 201 can be successfully protected.

In this embodiment, the products are sent to the user from the mail-order dealer afterwards. However, the user may input an e-mail address of the user in the addressee field, and digital contents (various application programs, image files, voice files, data files of database files, or registration number information for controlling a trial program to act as a complete form of a program) may be set to the input e-mail address.

Explanations will now specifically be made to the structure of each of the settlement server, sales server and terminal. In the following explanations, for the sake of simplicity, an error checking process or error processing will now be described. However, an embodiment, wherein the checking process or error processing is done, is included in the scope of the present invention.

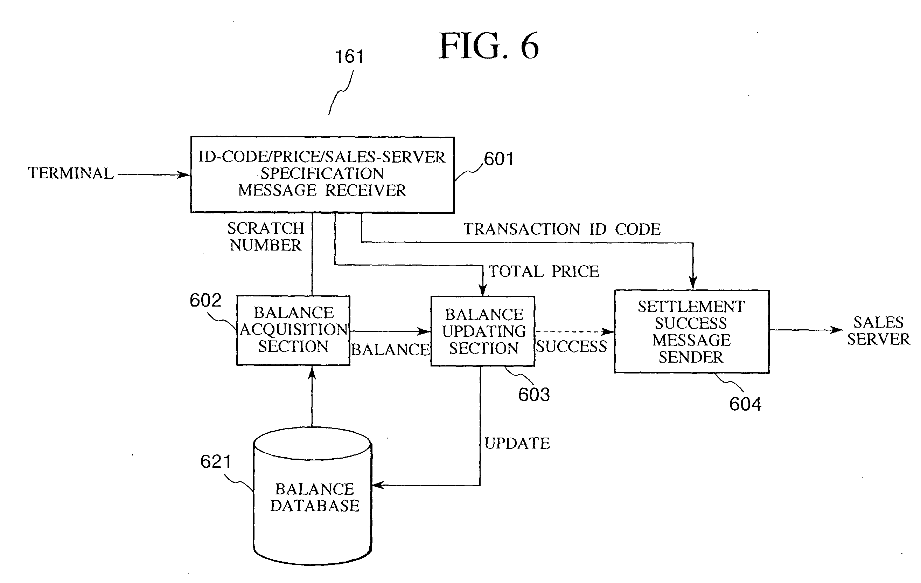

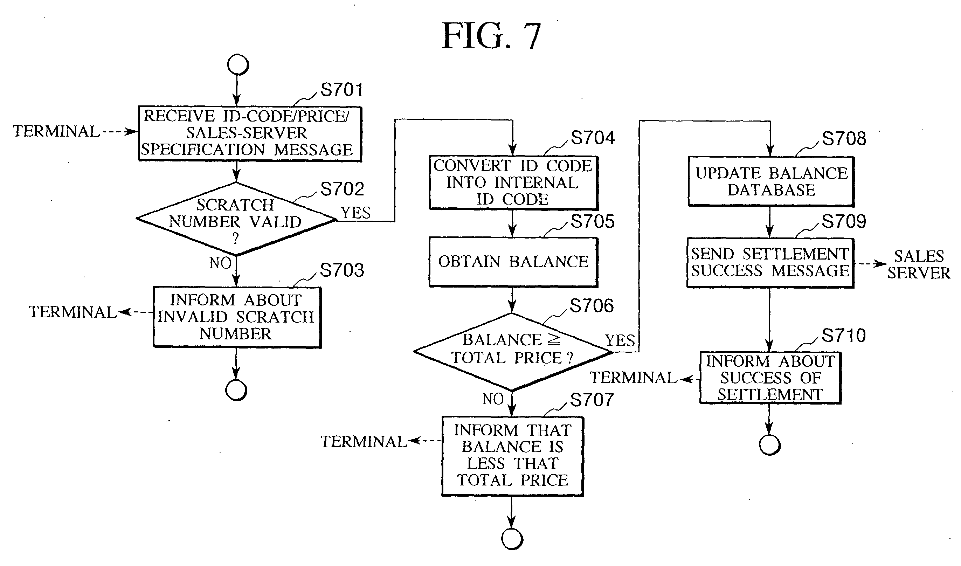

FIG. 6 is an exemplary diagram showing the schematic structure of the settlement server 161 included in the EDI system according to this embodiment. FIG. 7 is a flowchart showing the flow of a process which is carried out by the settlement server 161 in the case where any one of the above-described messages is transmitted.

The settlement server 161 comprises an ID-code/price/sales-server specification message receiver 601, a balance acquisition section 602, a balance updating section 603, and a settlement success message sender 604, as shown in FIG. 6.

The ID-code/price/sales-server specification message receiver 601 receives an ID-code/price/settlement-server specification message from the terminal 121 (Step S701).

The ID-code/price/sales-server specification message includes the information items as the follow:
- a desired product or services (in this embodiment, the information is specified in the transaction ID code);
- a price of the desired product or services, i.e. the total price;
- an ID code of the desired product or services (in this embodiment, the information is specified in the transaction ID code); and
- the corresponding sales server 141 (in this embodiment, the information is specified in the transaction ID code).

The balance obtaining section 602 checks whether an ID code for settlement (the scratch number) is valid or not (Step S702). In the case where the ID code is not valid (Step S702; No), the balance obtaining section 602 informs the terminal 121 that the ID code is not valid (Step S703).

In the case where the ID code is valid (Step S702; Yes), the balance obtaining section 602 converts the ID code for settlement (the scratch number) into an internal ID code so as to obtain the internal ID code corresponding to the prepaid card 201 (Step S704). Then, the balance obtaining section 602 obtains the balance, which is stored in advance in the balance database 621 in association with the internal ID code (Step S705).

The balance updating section 603 checks whether the obtained balance is equal to or greater than the total price (Step S706). In the case where the obtained balance is less than that (Step S706; No), the balance updating section 603 informs the terminal 121 that the obtained balance is less than the total price of the products (Step S707).

On the contrary, in the case where the obtained balance is equal to or greater than the total price (Step S706; Yes), the balance updating section 603 subtracts the total price from the balance, stored in advance in the balance database 621 in association with the internal ID code obtained from the ID code (the scratch number), so as to update the balance database 621 (Step S708).

The settlement success message sender 604 sends a settlement-success message including information representing that the settlement is succeeded to the sales server 141 specified in the transaction ID code (Step S709).

At the same time, the settlement success message sender 604 sends the information representing that the settlement is succeeded to the terminal 121 (Step S710).

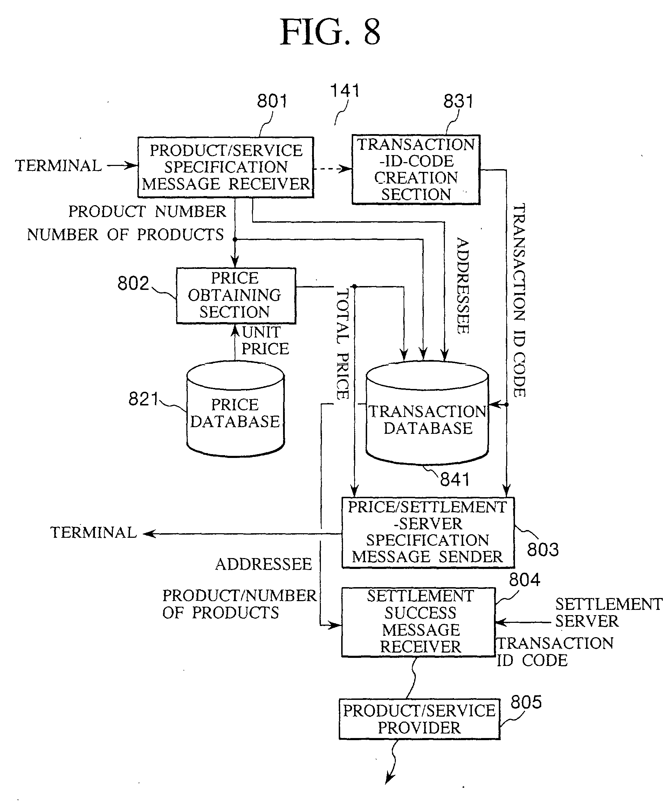

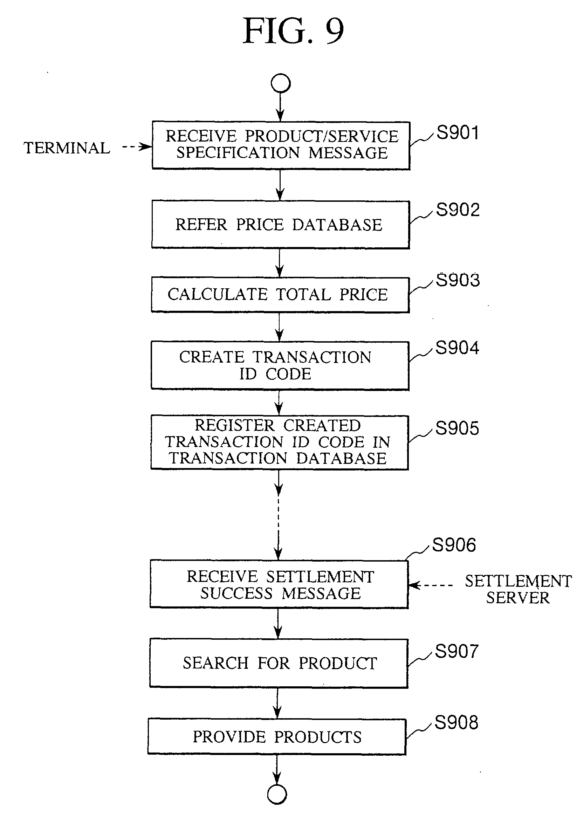

FIG. 8 is an exemplary diagram showing the schematic structure of the sales server 141 included in this embodiment. FIG. 9 is a flowchart showing the flow of a process carried out by the sales server 141, in the case where any of the above-described messages is transmitted.

The sales server 141 included in the EDI system according to this embodiment comprises a product/service specification message receiver 801, a price obtaining section 802, a price/settlement-server specification message sender 803, a settlement success message receiver 804, and a product/service provider 805.

The product/service specification message receiver 801 receives a product/service specification message from the terminal 121 (Step S901). This product/service specification message includes, likewise the above, information (in this embodiment, the product code and number of products to be purchased) specifying a desired product(s) or services to be provided.

The price obtaining section 802 refers to a price database 821 using the product code of the specified products as a key (Step S902), and calculates the total price of the products or services based on the price database 821 and the number of the products to be purchased (Step S903).

A transaction-ID-code creation section 831 creates a unique transaction ID code (Step S904), and stores the created unit transaction ID code in a transaction database 841 (Step S905), in association with information representing the product number, the number of products to be purchased, the total price thereof, and addressee of the purchased products.

The price/settlement-server specification message sender 803 sends a price/settlement-server specification message to the terminal 121. The price/settlement-server specification message includes at least the following information items of:
- the obtained price, i.e. the total price of the products to be purchased; and
- information specifying a settlement server (the information is specified in the "ACTION" attribute of the "FORM" tag).

In this embodiment, the price/settlement-server specification message includes information, such as the transaction ID code, etc.

The settlement success message receiver 804 receives a settlement success message ) including the information representing that the settlement is succeeded from the settlement server 161 (Step S906). In this embodiment, the settlement success message including the information, such as the transaction ID code, etc.

The product/service provider 805 refers to the transaction database 841 using the transaction ID code specified in the settlement success message as a key. Then, the product/service provider 805 acquires information representing the products or services, the number of the products to be purchased and the addressee of the products which are all specified in information included in the product/service specification message sent originally from the terminal 121 (Step S907).

Finally, the product/service provider 805 provides the number of the products or services to the addressee (Step S908).

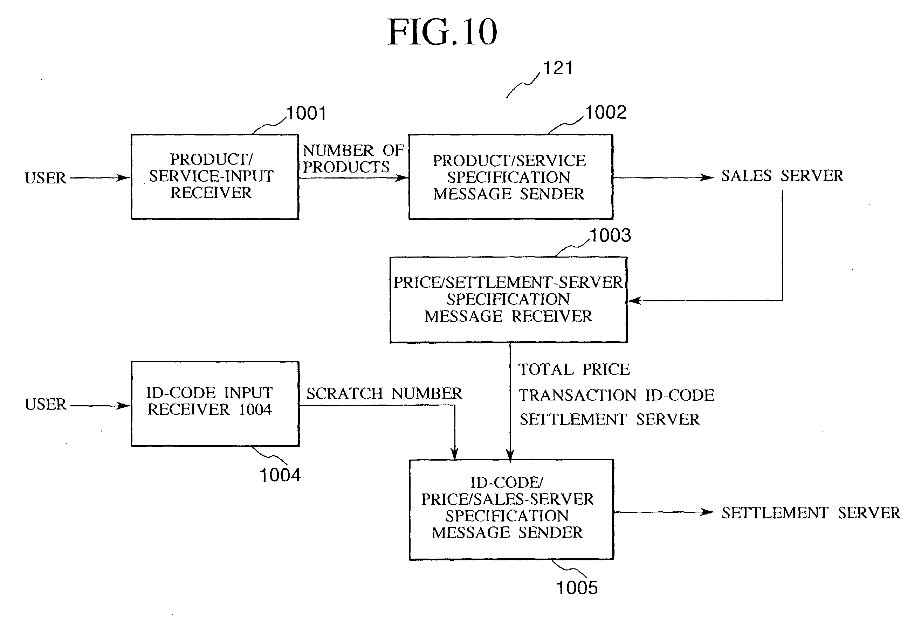

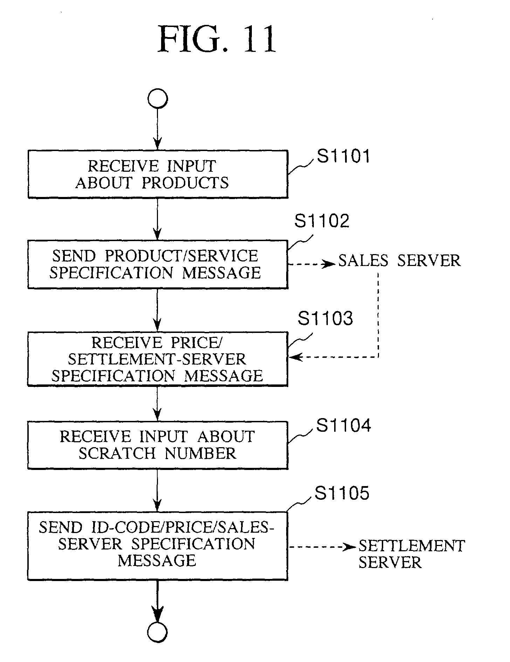

FIG. 10 is an exemplary diagram showing the schematic structure of the terminal 121 included in the EDI system of this embodiment. FIG. 11 is a flowchart showing the flow of a process carried out by the terminal 121 in the case where any of the above-described messages is transmitted.

The terminal 121 in this embodiment comprises a product/service-input receiver 1001, a product/service specification message sender 1002, a price/settlement-server specification message receiver 1003, an ID-code inputting receiver 1004 and an ID-code/price/sales-server specification message sender 1005.

The product/service-input receiver 1001 receives input data regarding a desired product(s) or services from the user (Step S1101).

The product/service specification message sender 1002 sends the received product/service specification message to the sales server 141 (Step S1102).

Further, the price/settlement-server specification message receiver 1003 receives a price/settlement-server specification message from the sales server 141 (Step S1103). As described above, the price/settlement-server specification message includes the total price and the information regarding the settlement server 161.

The ID-code input receiver 1004 receives input data representing an ID code (the scratch number) for settlement for purchased products or services to be provided (Step S1104). In this embodiment, the scratch number is printed on the prepaid card 201.

The ID-code/price/sales-server specification message sender 1005 creates an ID-code/price/sales-server specification message including the above information, and sends the created message to the settlement server 161 specified in the price/settlement-server message (Step S1105).

This realizes the applying for the desired products or services and the settlement for the payment thereof. After this, information representing that the settlement is succeeded is sent to the user, and the digital contents are sent in the form of an e-mail to the user, thereby the user can receive the desired products.

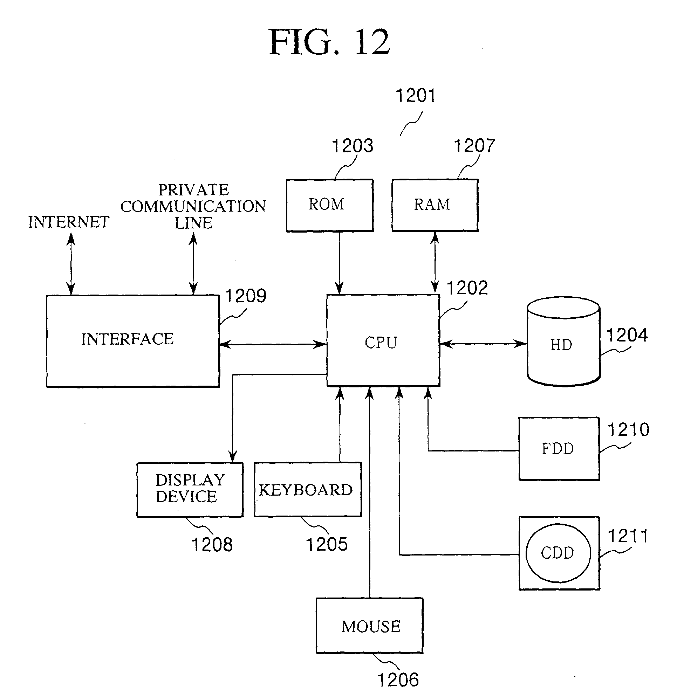

FIG. 12 is an exemplary diagram showing the schematic structure of an information processor (a general computer, various terminals, a mobile terminal, a cellular phone, and a dedicated system, such as a game player, etc.) which typically serves as any of the terminal 121, the sales server 141 and the settlement server 161.

An information processor 1201 is operated under the control of a CPU (Central Processing Unit) 1202. Upon application of a power supply to the information processor 1201, the CPU 1202 executes an IPL (Initial Program Loader) stored in a ROM (Read Only Memory) 1203.

The IPL is a program for reading and executing an OS (Operating System) program stored on a recording medium such as an HD (Hard Disk) 1204, an FD (Floppy Disk) installed in an FDD (FD Drive) 1201 or a CD-ROM installed in a CD-ROM (Compact Disk ROM) drive (CDD) 1211.

Upon activation of the OS, the CPU 1202 executes an application program stored in the hard disk 1204, etc., in response to an instruction input from a keyboard 1205 or mouse 1206 by the user, or in accordance with a setting file which has been written in advance in the hard disk 1204, etc.

Execute on the terminal 121 is a WWW browser application, whereas executed on the sales server 141 or settlement serer 161 is a Web server application.

In a small-sized information processor, such as a mobile terminal etc., the IPL itself may server as the OS or application program.

When executing the program, the CPU 1202 uses a RAM (Random Access Memory) 1207 as a temporary work memory area. In addition to this, a register or cache (not illustrated) included in the CPU 1202 is used as a temporary work memory area.

During the execution of the program, the CPU 1202 can display a report on processed information on a display device 1208, such as a liquid crystal display or CRT (Cathode Ray Tube) to shows such information to the user. In operations of the mouse 1206, the user moves the mouse 1206 so as to move a cursor shown on the display, and the user clicks the mouse 1206 so as to select an item pointed by the cursor.

The information processor 1201 can perform data communications through a computer communications network, such as the Internet 181, or the private communications line 182, using an interface 1209, such as a NIC (Network Interface Card) or modem, etc.

In the above embodiment, products are sent to the user having purchased the products from the mail-order dealer or in the form of an e-mail. However, in this embodiment, products or services are provided to the user through the WWW browser.

As explained in the above embodiment, the data communications between the terminal 121 and the sales server 141 or settlement server 161 is done through and by the WWW browser, using an HTTP (Hyper Text Transfer Protocol) technique or an HTTPS (HTTP with Security) having a security function added thereto.

In the case where the data communications is performed using the WWW browser and the communications protocol technique, unless no request is made from the terminal 121, the sales server 141 and settlement server 161 can not actively send (push) information to the terminal 121.

In the above embodiment, the sales server 141 actively provides the user with the products or services, using a physical delivery method (a postal service, home delivery service, etc.) or an e-mail technique which differs from the HTTP(S) technique.

As will now be described, according to the second embodiment of the present invention, the user of the terminal 121 can purchase products or services and achieve the settlement of the payment simply by the WWW browser.

Note that the procedures 301 to 306 of the data transmission shown in FIG. 3 and operations of the terminal 121, sales server 141 and settlement server 161 are the same in this embodiment.

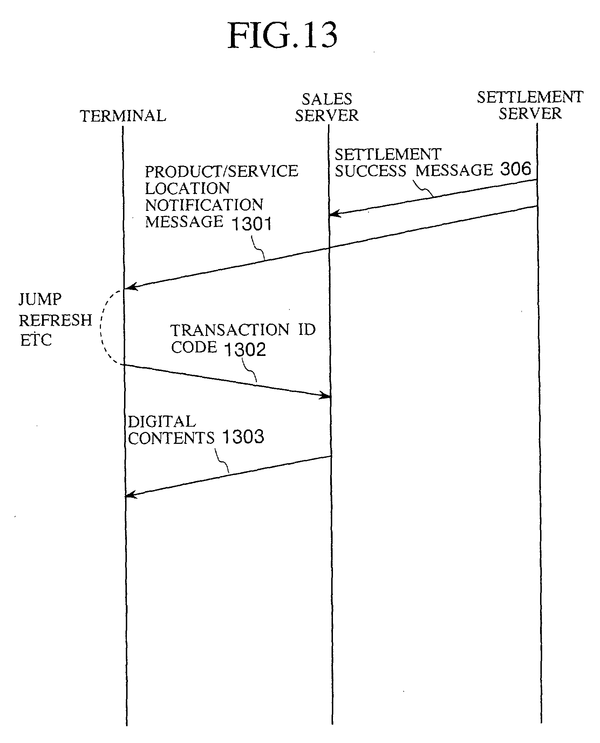

FIG. 13 is an explanatory diagram showing data transmission, wherein a message is sent and received among the terminal 121, the sales server 141 and the settlement server 161. For the sake of easy description, the procedures for sending/receiving the same messages as those described in the first embodiment will not be shown in FIG. 13.

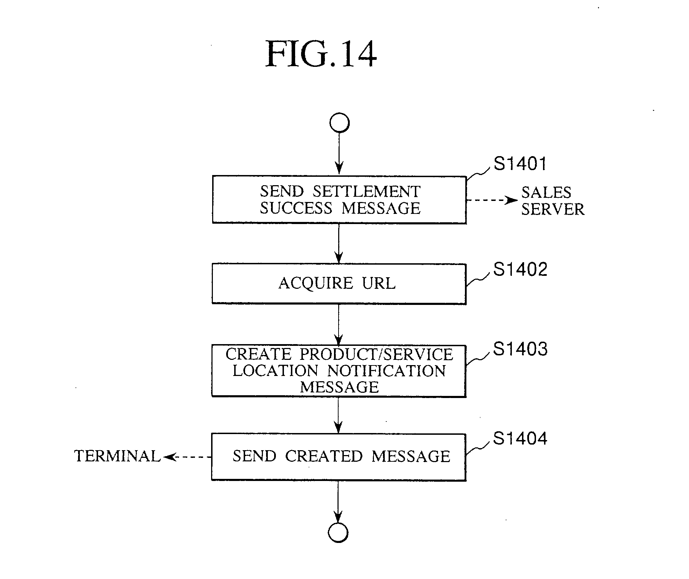

FIG. 14 is a flowchart showing the flow of a process carried out by the settlement server 161, when to send/receive messages as shown in FIG. 13.

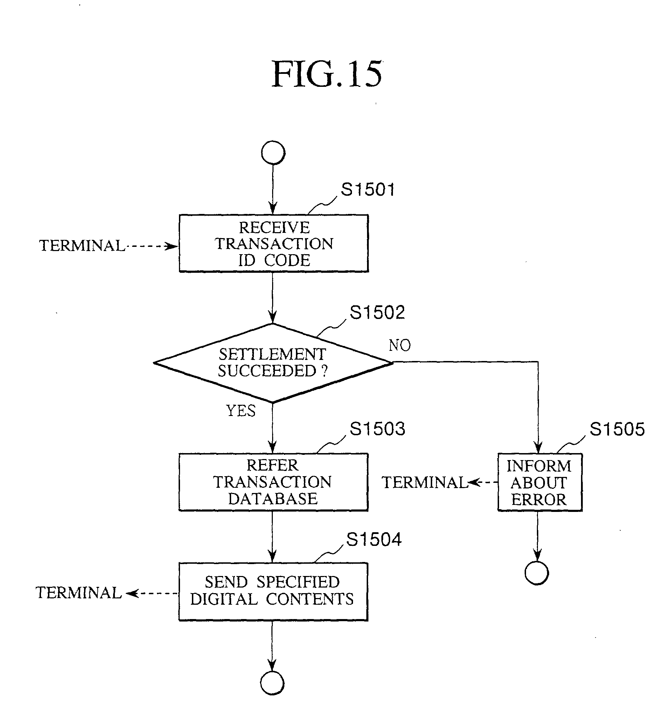

FIG. 15 is a flowchart showing the flow of a process carried out by the sales server, when to send/receive messages as shown in FIG. 13.

If the user accesses the sales server 141 using the terminal 121 and applies for desired products or services to be provided, the sales server 141 informs the terminal 121 about the total price of the applied products or services or a URL of the settlement server 161. The terminal 121 sends the scratch number to the settlement server 161. In the case where the settlement is succeeded, the settlement server 161 sends a settlement success message to the sales server 141, as shown in FIGS. 13 and 14, (306, Step S1401).

Upon reception of the settlement success message from the settlement server 161, the sales server 141 obtains a transaction ID coded included in the message, updates the transaction database, and records information representing that the settlement corresponding to the transaction ID code is completed.

Likewise the above embodiment, the settlement server 161 acquires the transaction ID code, at the time the settlement success message is sent.

The settlement server 161 acquires a URL showing an address of the CGI script by which the sales server 141 corresponding to the above settlement provides the user with the products or services (e.g. enabling the user to download the digital contents, etc.), based on the transaction ID code (Step S1402). The transaction ID code may include information regarding the sales server 141, as described above. For example, if the URL is registered in the settlement server in advance, the settlement server 161 can so easily acquire the URL.

In this embodiment, the sales server 141 sends a price/settlement-server specification message to the terminal 121, and the terminal 121 sends an ID-code/price/sales-server specification message to the settlement server 161. During this time, it can be considered that the information about the transaction ID code is sent from the sales server 141 to the settlement server 161. Hence, it can be assumed that the flow of the above message transmission corresponds to the transmission of the product/service-location specification message specifying a URL for providing products and/or service from the sales server 141 to the settlement server 161.

After the settlement success message is sent from the settlement server 161 to the sales server 141, the sales server 141 may send a product/service-location specification message including the transaction ID code to the settlement server 161 through the private communications line 182, as the acknowledgement of the arrival of the settlement success message.

Then, the settlement server 161 creates a product/service location notification message (Step S1403) including the following information items of:
- a URL for providing desired products or services (generally, a URL specifying an address of the WWW site of the sales server 141); and
- the transaction ID code.

The settlement server 161 sends the created product/service-location notification message to the terminal 121 (1301, Step S1404). This message transmission corresponds to the sending (307) of the information representing that the settlement is succeeded in the above first embodiment.

The HTTP technique is used based on a model, wherein a response is sent from a WWW server to a terminal upon reception of a request sent from the terminal to the WWW server. However, the WWW server having received the request may set another WWW server to act in place of the WWW server to send the response to the terminal. Typical examples of this method may be reloading of the request or server-redirection, etc.

In the reloading, in the case where information in an HTTP text form is received by the WWW browser of the terminal 121, an URL specified in a "REFRESH" attribute of a "META" tag included in the received information is automatically selected (so as to jump to the URL) as a URL specifying a target Web page to be displayed.

In the server-redirection technique, a URL specifying an address for providing products or services and a transaction ID code to be sent its CGI script as a parameter may specified as location information to be included in the head of an HTTP packet.

In addition, if the user clicks on an "Acquire" button displayed by the WWW browser on the display using the "FORM" tag, as described above, various information may be sent to the CGI script of the URL specifying the address for providing products or services.

In this case, a URL specifying an address of the CGI script of the sales server 141 to be providing products or services is specified in the "ACTION" attribute of the "FORM" tag, and a transaction ID code as a parameter to be sent using a POST method is specified therein.

Accordingly, the terminal 121 having sent the product/service-location notification message sends the transaction ID code to the sales server 141 in accordance with the specified information (1302).

The sales server 141 receives the transaction ID code from the terminal 121 (Step S1501), and checks whether the settlement corresponding to the received transaction ID code has already been succeeded (Step S1502).

In the case where the settlement corresponding to the received transaction ID code has already been succeeded (Step S1502; Yes), the sales server 141 retrieves the number of products or services corresponding to the received transaction ID code from the transaction database (Step S1503). Subsequently, the sales server 141 sends the corresponding products, etc. (e.g. the digital contents) to the WWW browser of the terminal 121 (1303, Step S1504).

In the case where the digital contents are any of various text files, image files, PDF (Portable Document Format) files, etc., the digital contents thereof are displayed by the WWW browser of the terminal 121.

In the case where the digital contents are music data, audio data, movie data, etc., the digital contents are reproduced by a multimedia plug-in included in the WWW browser.

On the contrary, in the case where the settlement corresponding to the received transaction ID code is not succeeded (Step S1502; No), in the case where a settlement success message representing that the settlement specified in the transaction ID code has not been sent from the settlement server 161 to the sales server 141, or in the case where the transaction ID code is invalid, the sales server 141 sends error information representing that the desired products can not be provided to the terminal 121 (Step S1505).

In this embodiment, when the user purchases the digital contents through the terminal 121, there is no need to specify the addressee of the products or services. This is because the products or services are provided through only the WWW browser. Hence, the privacy of the user can further be protected in the purchasing of the products, etc.

In this embodiment, as well, it is preferred that the security technology, such as the SSL technology or the like, is timely employed.

In the above-described first and second embodiment, the input form for inputting the scratch number is created by the sales server 141. Thus, it is advantageous that the style or design of the input form of the scratch number can be changed on the side of the sales server 141. However, it is desired, in many cases, that the input form be managed by the settlement server 161.

Further, it may be desired that the data communications be performed using the widely-used Internet. In this case, it may be desired that the data communications between the sales server 141 and the settlement server 161 be not open to the user of the terminal 121.

This embodiment can handle the above data transmissions using the above-described server-redirection technique.

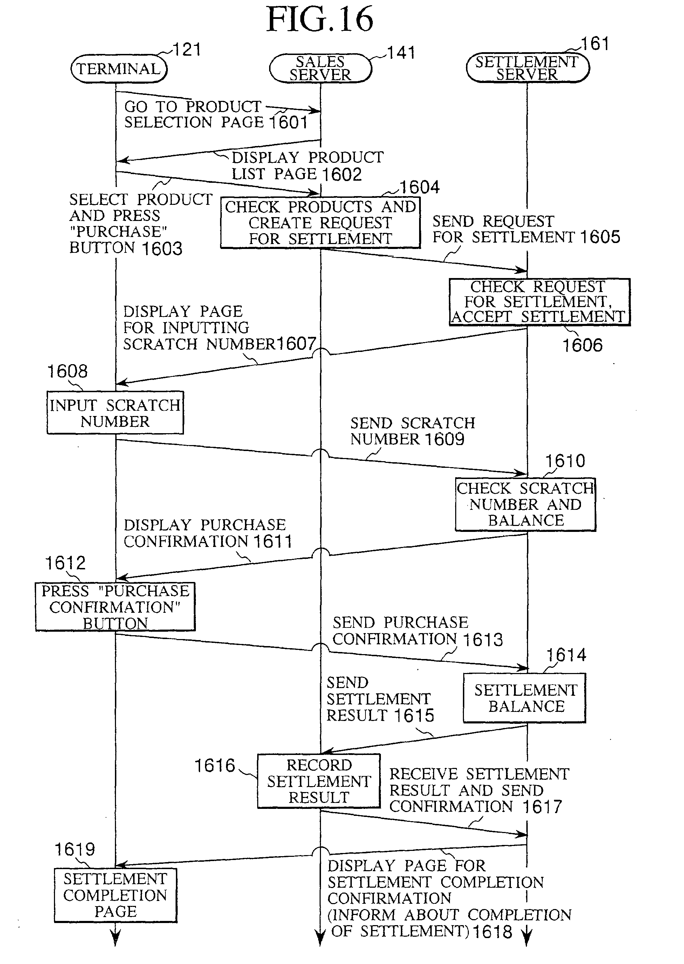

FIG. 16 is an exemplary diagram showing data transmissions, wherein messages are sent and received among the terminal 121, the sales server 141, the settlement server 161 through the Intemet. For the sake of simplicity, the same processes as those described in the above embodiments will not be explained again in this embodiment.

The user operates the terminal 121 to activate the WWW browser, accesses the sales server 141, and goes to a WWW page for selecting products to be purchased (1601). Then, the sales server 141 sends an HTTP packet(s) for displaying a page showing a list of products (1602).

The user selects a desired product from the list page displayed by the WWW browser of the terminal 121, and clicks on the "purchase" button. Then, a message representing that the user wants to purchase the product to the sales server 141 (1603).

The sales server 141 determines whether the product is appropriately selected. If there is no program in that, the sale server 141 creates a settlement request message (1604).

Then, the sales server 141 sends the created message to the settlement server 161 using a server-redirection technique (1605).

Upon reception of the settlement request message from the sales server 141, the settlement server 161 checks the contents of the message. If there is no problem in the contents of the message, the settlement server 161 accepts the settlement (1606).

After this, the settlement server 161 sends an HTTP packet(s) for inputting the scratch number to the terminal 121 (1607).

The user of the terminal 121 may see the data transmission through the procedures 1604 to 1607 as if "an input page for inputting the scratch number appears upon selection of a desired product". That is, the sales server 141 sets the settlement server 161 to act in place of the sales server 141 so as to send the HTTP packet for displaying the display page for inputting the scratch number.

If the user of the terminal 121 inputs the scratch number (1608) and sends the input information to the settlement server 161 (1609), the settlement server 161 checks the scratch number if it is a valid number, and checks the balance corresponding to the scratch number (1610).

Further, the settlement server 161 sends an HTTP packet for displaying a page for making sure if he/she really wants to purchase the product to the terminal 121 (1611).

If the user makes sure to purchase the product using the terminal 121 (1612), a purchase-confirmation message is sent to the settlement server 161 (1613).

The settlement server 161 carries out a process for updating the balance (1614), and informs the sales server 141 that the settlement is succeeded (1615).

The sales server 141 records the result of the settlement (1616), and sends confirmation information representing that the settlement result has been received to the settlement server 161 (1617).

Upon reception of the confirmation information, the settlement server 161 sends an HTTP packet (settlement completion information) for displaying a settlement-completion confirmation page for confirming that the settlement has been completed, to the terminal 121 (1618).

Then, the terminal 121 displays a page showing that the settlement has been completed (1619).

During the above procedures of 1614 to 1618, the server-redirection technique is employed for switching the procedures between the sides of the sales server 141 and settlement server 161. Hence, the user of the terminal 121 may see the data transmission through the procedures 1614 to 1618 as if "the settlement-completion page appears upon confirmation of the purchasing of the product".

Confirmation information representing that the settlement result has been received may include information representing the digital contents themselves to be provided to the user of the terminal or information representing a URL for providing the digital contents. The settlement server 161 may include an HTTP packet (settlement completion information) for displaying the included information on the settlement-completion confirmation page. This realizes that the user acquire the desired products (the digital contents) at the same time the settlement is completed.

Accordingly, in this embodiment, the settlement server 161 can set the structure of the input form for inputting the scratch number necessary for the settlement or the page for making sure if the user really wants to purchase the products, so that the settlement server 161 can collectively manage the input form displayed on the terminal 121.

Using the existing infrastructure of the Internet or the server-redirection technique, the user of the terminal 121 may see the data transmission as if the sales server 141 and the settlement server 161 work together in one unit to carry out the above procedures, even through the sales server 141 and the settlement server 161 separately manages different information in fact. That is, the data transmission performed between the sales server 141 and the settlement server 161 can be concealed from the user of the terminal 121.

Those process and procedures performed between the sales server 141 and the settlement server included in the EDI system of this embodiment may be realized, using not only various WWW server techniques employing the CGI script or Servlet, but also a database technique employing an SQL database, etc.

Transmitted between the sales server 141 and the settlement server 161 is product information, information representing the price of products and information representing whether the corresponding sales server 141 is a valid sales server 141. To establish such data communications while maintaining the security, it is preferred that a public key cryptosystem, a common key cryptosystem, a one-way hashing function, CRC (Cyclic Redundancy Check), checksum, etc. be employed.

In the above description, the processes or procedures are realized on the terminal by the existing WWW browser. However, dedicated software available at store may be used and installed in the terminal so as to carry out the processes or procedures.

Various embodiments and changes may be made thereonto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

## Claims

1. An EDI (Electronic Data Interchange) system (101) comprising at least one terminal (121), at least one sales server (141) and a settlement server (161), and said system **characterized in that**:
(a) said at least one terminal (121)
receives input data regarding a desired product or services to be provided, and
sends a product/service specification message including information specifying the desired product or services to be provided, to said at least one sales server (141);
(b) said at least one sales server (141)
receives the product/service specification message,
acquires a price of the product or services specified in the information included in the product/service specification message, and
sends a price/settlement-server specification message including the acquired price and information specifying said settlement server, to said at least one terminal (121);
(c) said at least one terminal (121)
receives the price/settlement-server specification message from said at least one sales server (141),
receives input data representing an ID (identification) code for product or services, and
sends, to the settlement server (161) specified in the information included in the price/settlement-server specification message, an ID-code/price/sales-server specification message including information specifying the ID code, the price specified in the information included in the price/settlement-server specification message and said at least one sales server (141);
(d) said settlement server (161)
receives the ID-code/price/sales-server specification message,
acquires balance stored in advance in association with the ID code specified in the information included in the ID-code/price/sales-server specification message,
in a case where the acquired balance is equal to or greater than the price specified in the information included in the ID-code/price/sales-server specification message, (d1) updates the balance by subtracting the price from the balance stored in advance in association with the ID code, and (d2) sends a settlement success message including information representing that settlement is succeeded to said at least one sales server (141) specified in the information included in the ID-code/price/sales-server specification message; and
(e) said at least one sales server (141)
receives the settlement success message, and
provides the product or services specified in the information included in the product/service specification message.

2. The EDI system (101) according to claim 1, **characterized in that** said at least one sales server (141) controls said settlement server to send the price/settlement-server specification message to said at least one terminal (121), instead of sending the price/settlement-server specification message to said at least one terminal (121) directly therefrom.

3. The EDI system (101) according to claim 1, **characterized in that**:
said at least one sales server (141) includes information specifying the product or services specified in the information included in the product/service specification message, in the price/settlement-server specification message;
said at least one terminal (121) includes information specifying the product or services specified in the information included in the price/settlement-server specification message, in the ID-code/price/sales-server specification message;
said settlement server (161) includes information specifying the product or services specified in the information included in the ID-code/price/sales-server specification message, in the settlement success message; and
said at least one sales server (141) acquires the product or services specified in the information included in the product/service specification message, from the information specifying the product or services specified in the settlement success message.

4. The EDI system (101) according to claim 1, **characterized in that**
the price/settlement-server specification message is encoded by said at least one sales server (141) and decoded by said at least one terminal (121).

5. The EDI system (101) according to claim 1, **characterized in that**
the ID-code/price/sales-server specification message is encoded by said at least one terminal (121), and decoded by said settlement server (161).

6. The EDI system according to claim 1, **characterized in that**
at least one of the product/service specification message, the price/settlement specification message, the settlement success message, and the ID-code/price/sales-server specification message is transmitted through a computer communications network, especially Internet (181).

7. The EDI system (101) according to claim 1, **characterized in that** in a case where said at least one sale server (141) provides said at least one terminal (121) with the product or services specified in the information included in the product/service specification message:
(f) said at least one sales server (141) sends a product/service-location specification message including information specifying a location of the product or services, to said settlement server (161);
(g) said settlement server (161) receives the product/service-location specification message from said at least one sales server (141), and
sends a product/service-location notification message including information specifying the location of the product or services specified in the information included in the product/service-location specification message; and
(h) said at least one terminal (121) receives the product/service-location notification message, and
acquires the product or services, from the location thereof specified in the information included in the product/service-location notification message.

8. The EDI system according to claim 7, **characterized in that**
the product/service-location notification message is encoded by said settlement server, and decoded by said at least one terminal.

9. The EDI system (101) according to claim 7, **characterized in that**
the product/service-location notification message is transmitted through a computer communications network, especially Internet (181).

10. The EDI system (101) according to claim 9, **characterized in that**
either one or both of the product/service specification message and the ID-code/price/sales-server specification message is/are transmitted in a URL (Uniform Resource Locator) form with a query string or a POST or GET method form for a CGI (Common Gateway Interface).

11. A sales server (141) performing data communications with at least one terminal (121) and a settlement server (161), and said sales server **characterized by** comprising:
a product/service specification message receiver (801) which receives a product/service specification message including information specifying a desired product or services to be provided, from said at least one terminal;
a price obtaining section (802) which obtains a price of the product or services specified in the information included in the product/service specification message;
a price/settlement-server specification message sender (803) which sends a price/settlement-server specification message including information specifying the obtained price and settlement server (161), to said at least one terminal (121);
a settlement-success message receiver (804) which receives a settlement success message including information representing that settlement is succeeded, from said settlement server (161); and
a product/service provider (805) which provides the product or services specified in the information included in the product/service specification message.

12. The sales server (141) according to claim 11, **characterized in that**
said price/settlement-server specification message sender (803) controls said settlement server (161) to send the price/settlement-server specification message to said at least one terminal (121), instead of sending the price/settlement-server specification message to said at least one terminal (121) directly therefrom.

13. The sales server (141) according to claim 11, **characterized by** further including
a product/service-location specification message sender which sends a product/service-location specification message including information specifying a location of the product or services, to said settlement server (161), in a case where the product or services specified in the information included in the product/service specification message is to be sent to said at least one terminal (121).

14. A settlement server (141) performing data communications with at least one terminal (121) and at least one sales server (161), and said settlement server (141) **characterized by** comprising:
an ID-code/price/sales-server specification message receiver (601) which receives, from said at least one terminal (121), an ID-code/price/sales-server specification message information including a product or services, a price of the product or services, a settlement ID code for the product or services and the at least one sales server (161);
a balance acquisition section (602) which acquires balance stored in advance in association with the ID code specified in the information included in the ID-code/price/sales-server specification message;
a balance updating section (603) which updates the balance by subtracting the price from the balance stored in advance in association with the ID code, in a case where the balance is equal to or greater than the price specified in the information included in the ID-code/price/sales-server specification message; and
a settlement-success message sender (604) which sends a settlement success message including information representing that settlement is succeeded to said at least one sales server (141) specified in the information included in the ID-code/price/sales-server specification message, in a case where the balance is updated.

15. The settlement server (161) according to claim 14, **characterized by** further including
a price/settlement-server specification message sending agent which sends a price/settlement-server specification message including information specifying the price and said settlement server (161), from said sales server (141) to said at least one terminal (121).

16. The settlement server (161) according to claim 14, **characterized by** further including:
a product/service-location specification message receiver which receives a product/service-location specification message including information specifying location of the product or services, from said at least one sales server (141); and
a product/service-location notification message which sends a product/service location notification message including information specifying the location of the product or services specified in the product/service location specification message, to said at least one terminal (121).

17. A terminal (121) performing data communications with at least one sales server (141) and a settlement server (161), said terminal **characterized by** comprising:
a product/service input accepting section (1001) which accepts input data regarding a desired product or services to be provided;
a product/service specification message sender (1002) which sends a product/service specification message including information specifying the accepted product or services, to said at least one sales server (141);
a price/settlement-server specification message receiver (1003) which receives a price/settlement-server specification message including information specifying a price of the product or services and the settlement server (161);
an ID-code input accepting section (1004) which accepts input data of a settlement ID code for the product or services; and
an ID-code/price/sales-server specification message sender (1005) which sends an ID-code/price/sales-server specification message including information specifying the ID code, the price specified in the information included in the price/settlement-server specification message and said at least one sales server (141), to said settlement server (161) specified in the information included in the price/settlement-server specification message.

18. The terminal (121) according to claim 17, **characterized by** further including:
a product/service-location notification message receiver which receives a product/service-location notification message including information specifying location of the product or services, from said settlement server (161); and
a product/service obtaining section which obtains the product or services, from the location of the product or services specified in the information included in the product/service-location notification message.

19. A sales method of selling products through data communications with at least one terminal and a settlement server, said method **characterized by** comprising the steps of:
receiving a product/service specification message including information specifying a desired product or services to be provided, from said at least one terminal;
obtaining a price of the product or services specified in the information included in the product/service specification message;
sending a price/settlement-server specification message including information specifying the obtained price and the settlement server, to said at least one terminal;
receiving a settlement-success message including information representing that settlement is succeeded, from said settlement server; and
providing the product or services specified in the information included in the product/service specification message.

20. The method according to claim 19, **characterized in that**
at said price/settlement-server specification message sending step, said settlement server is controlled to send the price/settlement-server specification message to said at least one terminal, in stead of directly sending the price/settlement-server specification message to said at least one terminal therefrom.

21. The method according to claim 19, **characterized by** further including the step of
sending a product/service-location specification message including information specifying location of the product or services to said settlement server, in a case where the product or services specified in the information included in the product/service specification message is/are to be provided to said at least one terminal.

22. A settlement method of performing settlement through data communications with at least one terminal and at least one sales server, said method **characterized by** comprising the steps of:
receiving, from said at least one terminal, an ID-code/price/sales-server specification message including information specifying a product or services to be provided, a price of the product or services, a settlement ID code of the product or services and said at least one sales server;
obtaining balance stored in advance in association with the ID code specified in the information included in the ID-code/price/sales-server specification message;
updating the balance by subtracting the price from the balance stored in advance in association with the ID code, in a case where the balance is equal to or greater than the price specified in the information included in the ID-code/price/sales-server specification message; and
sending a settlement-success message including information representing that settlement is succeeded, to said at least one sales server specified in the information included in the ID-code/price/sales-server specification message, in a case where the balance is updated.

23. The settlement method according to claim 22, **characterized by** further including the step of
sending, in place of said at least one sales server, a price/settlement-server specification message including information specifying the price and a settlement server for executing the settlement method, to said at least one terminal.

24. The settlement method according to claim 22, **characterized by** further including the steps of:
receiving a product/service-location specification message including information specifying location of the product or services, from said at least one sales server, and
sending a product/service-location notification message including information specifying the location of the product or services specified in the information included in the product/service-location specification message, to said at least one terminal.

25. A method for purchasing a product or services through data communications with at least one sales server and a settlement server, said method **characterized by** comprising the steps of:
accepting input data regarding a desired product or services;
sending a product/service specification message including information specifying the accepted product or services, to said at least one sales server;
receiving, from said at least one sales server, a price/settlement-server specification message including information specifying a price of the product or services and a settlement server;
accepting input data regarding a settlement ID code of the product or services; and
sending an ID-code/price/sales-server specification message including information specifying the ID code, the price specified in the information included in the price/settlement-server specification message and said at least one sales server, to said settlement server specified in the information included in the price/settlement-server specification message.

26. The method according to claim 25, **characterized by** further including the steps of:
receiving, from said settlement server, a product/service-location notification message including information specifying location of the product or services; and
obtaining the product or services, from the location of the product or services specified in the information included in the product/service-location notification message.

27. A program product for controlling a computer which performs data communications with at least one terminal and a settlement server to function as:
a product/service-specification message receiver which receives a product/service specification message including information specifying a desired product or services to be provided, from said at least one terminal;
a price obtaining section which obtains a price of the product or services specified in the information included in the product/service specification message;
a price/settlement-server specification message sender which sends a price/settlement-server specification message including information specifying the obtained price and said settlement server, to said at least one terminal;
a settlement-success message receiver which receives a settlement success message including information representing that settlement is succeeded, from said settlement server; and
a product/service provider which provides the product or services specified in the information included in the product/service specification message.

28. A program product for controlling a computer, which performs data communications with at least one terminal and at least one sales server, to function as:
an ID-code/price/sales-server specification message receiver which receives, from said at least one terminal, an ID-code/price/sales-server specification message including information specifying the product or services to be provided, a price of the product or services, a settlement ID code of the product or services and said at least one sales server;
a balance acquisition section which acquires balance stored in advance in association with the ID code specified in the information included in the ID-code/price/sales-server specification message;
a balance updating section which updates the balance by subtracting the price from the balance stored in advance in association with the ID code, in a case where the balance is equal to greater than the price specified in the information included in the ID-code/price/sales-server specification message; and
a settlement-success message sender which sends a settlement success message including information representing that settlement is succeeded, to said at least one sales server specified in the information included in the ID-code/price/sales-server specification message, in a case where the balance is updated.

29. A program product for controlling a computer, which performs data communications with at least one sales server and a settlement server, to function as:
a product/service input accepting section which accepts input data regarding a desired product or services to be provided;
a product/service specification message sender which sends a product/service specification message including information specifying the desired product or services, to said at least one sales server;
a price/settlement-server specification message receiver which receives, from said at least one sales server, a price/settlement-server specification message including information specifying a price of the product or services to be provided and said settlement server;
an ID-code input accepting section which accepts input data of a settlement ID code of the product or services; and
an ID-code/price/sales-server specification message sending section which sends an ID-code/price/sales-server specification message including information specifying the ID code, the price specified in the information included in the price/settlement-server specification message and said at least one sales server, to said settlement server specified in the information included in the price/settlement-server specification message.

30. An EDI system including at least one terminal, at least one terminal and a settlement server, **characterized in that**:
(a) said at least one terminal
accepts input data of a desired product or services to be provided, and
sends a product/service specification message including information specifying the accepted product or services, to said at least one sales server;
(b) said at least one sales server
receives the product/service specification message,
obtains a product of the product or services specified in the information included in the product/service specification message, and
instructs said settlement server to send a price/settlement-server specification message including information specifying the obtained price and said settlement server,
(c) said settlement server sends the price/settlement-server specification message to said at least one terminal;
(d) said at least one terminal
receives the price/settlement-server specification message,
accepts input data of a settlement ID code of the product or services, and
sends an ID-code/price/sales-server specification message including information specifying the ID code, the price specified in the information included in the price/settlement-server specification message and said at least one sales server, to said settlement server specified in the information included in the price/settlement-server specification message;
(e) said settlement server
receives the ID-code/price/sales-server specification message,
acquires balance stored in advance in association with the ID code specified in the information included in the ID-code/price/sales-server specification message, and
sends a purchase-confirmation-page displaying message to said at least one terminal, in a case where the balance is equal to or greater than the price specified in the information included in the ID-code/price/sales-server specification message,
(f) said at least one terminal
receives the purchase-confirmation-page displaying message,
accepts input data of purchase confirmation, and
sends a purchase-confirmation response message to said settlement server, in a case where purchasing of the product or services is confirmed based on the input data;
(g) said settlement server
sends the purchase-confirmation response message,
updates the balance by subtracting the price from the balance stored in advance in association with the ID code, and
sends a settlement success message including information representing that settlement is succeeded to said at least one sales server;
(h) said at least one sales server
receives the settlement success message,
sends a settlement-result-receipt confirmation message to said settlement server, and
provides the product or services specified in the information included in the product/service specification message;
(i) said settlement server
receives the settlement-result-receipt confirmation message, and
sends a settlement-completion notification message to said at least one terminal; and
(j) said at least one terminal
receives the settlement-completion notification message.
